# EUROPEAN PATENT APPLICATION

(11) **EP 3 165 273 A1**
(43) Date of publication of application: **10.05.2017**
(21) Application number: 16779815.6
(22) Date of filing: 22.02.2016
(51) Int. Cl.: B01D 53/50, B01D 53/18, B01D 53/78, B63B 9/00, B63H 21/32

(54) **EXHAUST GAS TREATMENT DEVICE, AND METHOD FOR PERFORMING MAINTENANCE OF EXHAUST GAS TREATMENT DEVICE**

(30) Priority: 15.04.2015 JP 2015083465
(71) Applicant: Fuji Electric Co., Ltd., Kawasaki-shi Kanagawa 210-9530 (JP)
(72) Inventor: TANAKA, Yasuhito, Kawasaki-shi Kanagawa 210-9530 (JP); TAKAHASHI, Kuniyuki, Kawasaki-shi Kanagawa 210-9530 (JP)
(74) Representative: MERH-IP Matias Erny Reichl Hoffmann Patentanwälte PartG mbB
(86) International application number: PCT/JP2016/055121
(87) International publication number: WO 2016/167023

(57) **Abstract**

Maintenance is performed on an ejecting section without temporarily removing an absorption tower from an installation platform. Therefore, since a crane or the like is not needed to remove the absorption tower, problems of space being needed to install the crane and cost increase due to installation of the crane are solved. In addition, the maintenance work time is shortened by the time needed to remove the absorption tower. Provided is an exhaust gas processing apparatus comprising an absorption tower that cleans exhaust gas by causing gas-liquid contact between the exhaust gas and a liquid. The absorption tower includes an ejecting section that ejects the liquid inside the absorption tower, and a door portion that is able to open and close at least a portion of a side wall of the absorption tower.

## Description

### BACKGROUND

### 1. TECHNICAL FIELD

The present invention relates to an exhaust gas processing apparatus and an exhaust gas processing apparatus maintenance method.

### 2. RELATED ART

Conventionally, sulfur oxide (SOx) and the like in exhaust gas is removed by gas-liquid contact between the exhaust gas introduced into an absorption tower and a liquid emitted from a nozzle provided in the absorption tower, as shown in Patent Document 1, for example.

Patent Document 1: Japanese Patent No. 3073972

Maintenance must be performed periodically on the nozzle provided in the absorption tower. Normally, the absorption tower includes the nozzle, a pipe supplying the liquid to the nozzle, and the like, and these components are formed integrally. Therefore, when performing maintenance on the nozzle, it is necessary to temporarily remove and separate the absorption tower from the exhaust gas processing apparatus. Since a crane or the like is needed to remove the absorption tower, space is needed to install the crane used for performing maintenance. In addition, there are problems that the cost increases due to the installation of the crane and the maintenance work time increases by the time needed to remove the absorption tower.

### SUMMARY

According to a first aspect of the present invention, provided is an exhaust gas processing apparatus comprising an absorption tower that cleans exhaust gas by causing gas-liquid contact between the exhaust gas and a liquid. The absorption tower may include an ejecting section and a door portion. The ejecting section may eject the liquid inside the absorption tower. The door portion may be able to open and close at least a portion of a side wall of the absorption tower.

The exhaust gas processing apparatus may further comprise a rotating mechanism. The rotating mechanism may link the door portion and the absorption tower such that the door portion is able to rotate relative to the absorption tower.

The rotating mechanism may link the door portion and the absorption tower such that the door portion is able to rotate with a longitudinal direction of the absorption tower as an axis.

The absorption tower may include a first divided portion and a second divided portion obtained by dividing the side wall of the absorption tower with a first plane passing through a central axis in the longitudinal direction of the absorption tower. The door portion may be at least one of the first divided portion and the second divided portion of the side wall.

The first divided portion and the second divided portion may be linked to the absorption tower such that the first divided portion and the second divided portion are able to rotate in opposite directions from each other with the rotating mechanism as an axis. The first divided portion and the second divided portion may both be the door portion. The absorption tower may be secured to a wall surface of a ship via the rotating mechanism. The absorption tower may further include an immovable portion where the side wall does not open and close. The door portion may include a first door and a second door. The first door may be provided in a manner to be able to rotate with an end portion of the immovable portion as an axis. The second door may be provided in a manner to be able to rotate in a direction opposite the rotating direction of the first door with an end portion of the immovable portion on a side opposite the first door as an axis.

The absorption tower may include a first divided portion and a second divided portion obtained by dividing the absorption tower with a first plane passing through a central axis in the longitudinal direction of the absorption tower, and a third divided portion and a fourth divided portion obtained by dividing the second divided portion with a second plane that differs from the first plane and passes through a central axis in the longitudinal direction of the absorption tower. The first divided portion may be the immovable portion. The third divided portion and the fourth divided portion may respectively be the first door and the second door.

The door portion may be provided in a region that is at least a portion of a region opposite the ejecting section. The door portion may be provided in a region that is wider than a region opposite the ejecting section in a longitudinal direction of the absorption tower.

The absorption tower may include at least an introduction pipe, an absorption pipe, and an exhaust gas output pipe. The absorption pipe may house the ejecting section therein. The door portion may be provided across an entire length of the absorption pipe in the longitudinal direction.

A density of a material of the door portion may be less than a density of a material of the side wall of the absorption tower other than the door portion. The exhaust gas processing apparatus may further comprise a covering section. The covering section may be provided inside the absorption tower. The covering section may cover a connecting portion between the door portion and the absorption tower.

The covering section may include a connecting end and an open end. The connecting end may be connected to one of the door portion and the absorption tower. The open end may be positioned on a side opposite the connecting end relative to the connecting portion. The open end need not be connected to the door portion and the absorption tower. The absorption tower may further include an exhaust gas introducing section. The exhaust gas introducing section may introduce the exhaust gas in a manner to circulate inside the absorption tower in a predetermined circulation direction. The connecting end may be provided upstream from the open end in the circulation direction.

The door portion includes a plurality of doors. The plurality of doors may be obtained by dividing the absorption tower at a plurality of different positions in the longitudinal direction of the absorption tower. The absorption tower may include an integrated immovable portion to which the plurality of doors are joined. The plurality of doors may include a third door and a fourth door. The third door and the fourth door may be able to open and close in opposite directions from each other relative to the immovable portion.

The rotating mechanism may include a plurality of rotating mechanisms. The plurality of rotating mechanisms may be provided corresponding respectively to the plurality of doors. The plurality of rotating mechanisms may be provided at positions corresponding respectively to the opening and closing directions of each of the plurality of doors. At least one rotating mechanism among the plurality of rotating mechanisms may be provided at a position where the absorption tower intersects with a first plane passing through a central axis in the longitudinal direction of the absorption tower. At least another one rotating mechanism among the plurality of rotating mechanisms may be provided at a position other than the position where the absorption tower intersects with the first plane.

According to a second aspect of the present invention, a maintenance method of an exhaust gas processing apparatus including an absorption tower that cleans exhaust gas by causing gas-liquid contact between the exhaust gas and a liquid. The method may comprise opening a door; performing maintenance on an ejecting section, in a state where the inside of the absorption tower is exposed; and closing the door portion. The door portion may be able to open and close at least a portion of a side wall of the absorption tower. The ejecting section may eject the liquid.

The summary clause does not necessarily describe all necessary features of the embodiments of the present invention. The present invention may also be a subcombination of the features described above.

### BRIEF DESCRIPTION OF THE DRAWINGS

Fig. 1 is a schematic view of a front surface of an exhaust gas processing apparatus 100 according to a first embodiment.
Fig. 2 is a schematic view of a side surface of the exhaust gas processing apparatus 100.
Fig. 3 is a schematic view of the AA cross section from Fig. 1 in the closed state.
Fig. 4 is a schematic view of the AA cross section from Fig. 1 in the open state.
Fig. 5 is a schematic view of the AA cross section in the closed state, according to a modification of the first embodiment.
Fig. 6 is a schematic view of the AA cross section in the closed state, according to a second embodiment.
Fig. 7 is a schematic view of the AA cross section in the open state, according to the second embodiment.
Fig. 8 is a schematic view of the AA cross section in the closed state, according to a third embodiment.
Fig. 9 is a schematic view of the AA cross section in the open state, according to a third embodiment.
Fig. 10 shows an example in which a covering section 37 is provided in the first embodiment.
Fig. 11 shows an example in which a covering section 37 is provided in the third embodiment.
Fig. 12 is a schematic view of a front surface of an exhaust gas processing apparatus 110 according to a fourth embodiment.
Fig. 13 is a schematic view of a front surface of an exhaust gas processing apparatus 120 according to a fifth embodiment.
Fig. 14 is a schematic view of the BB cross section from Fig. 13 in the open state.
Fig. 15 is a schematic view of a front surface of an exhaust gas processing apparatus 130 according to a sixth embodiment.
Fig. 16 is a schematic view of the CC cross section from Fig. 15 in the open state.
Fig. 17 is a schematic view of a front surface of an exhaust gas processing apparatus 140 according to a seventh embodiment.
Fig. 18 is a schematic view of the DD cross section from Fig. 17 in the open state.
Fig. 19 is a flow chart showing a maintenance method of the exhaust gas processing apparatus 120.

### DESCRIPTION OF EXEMPLARY EMBODIMENTS

Hereinafter, some embodiments of the present invention will be described. The embodiments do not limit the invention according to the claims, and all the combinations of the features described in the embodiments are not necessarily essential to means provided by aspects of the invention.

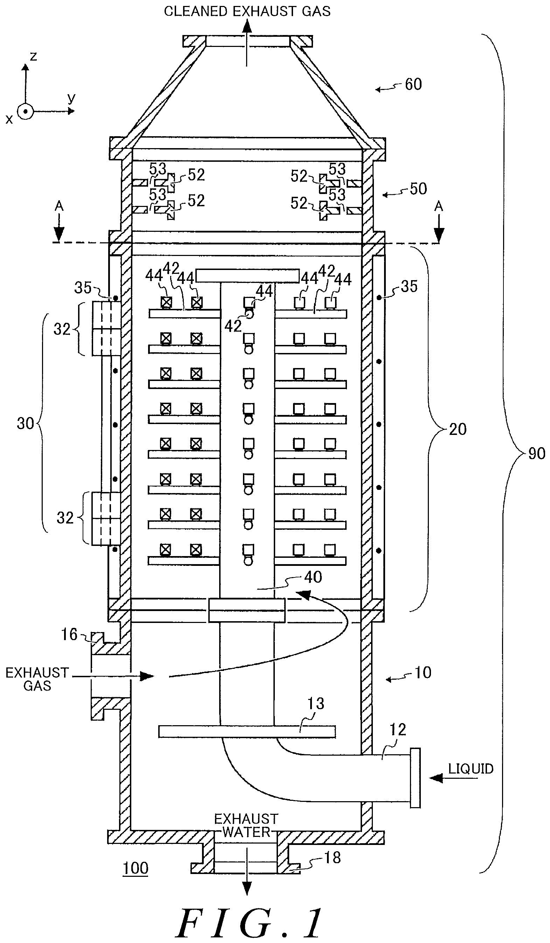

Fig. 1 is a schematic view of a front surface of an exhaust gas processing apparatus 100 according to a first embodiment. The exhaust gas processing apparatus 100 includes an absorption tower 90. In the present example, the longitudinal direction of the absorption tower 90 is the z direction. The z direction is perpendicular to a plane including the x direction and the y direction, which are orthogonal to each other. When the exhaust gas processing apparatus 100 is used and when maintenance is performed on the exhaust gas processing apparatus 100, the z direction may be perpendicular to the floor of a ship. When the exhaust gas processing apparatus 100 is being manufactured, the z direction may be parallel to the ground.

The absorption tower 90 includes an introduction pipe 10, an absorption pipe 20, an outer pipe 50, and an exhaust gas output pipe 60. The absorption tower 90 may have a cylindrical internal space. A central axis in the pillar-shaped internal spaces of the introduction pipe 10, the absorption pipe 20, the outer pipe 50, and the exhaust gas output pipe 60 may be the same for these components. In order to facilitate understanding in Fig. 1, internal cross sections of the introduction pipe 10, the absorption pipe 20, the outer pipe 50, and the exhaust gas output pipe 60 are shown. It should be noted that the structures inside the introduction pipe 10 and the absorption pipe 20 are shown in a state that is not a cross section.

The introduction pipe 10 includes a liquid introducing section 12, a baffle 13, an exhaust gas introducing section 16, and an exhaust water expelling section 18. The liquid introducing section 12 may be inserted near the bottom of the introduction pipe 10 to the inside of the introduction pipe 10 from a side surface of the introduction pipe 10, and may extend to a region near a connecting portion between the introduction pipe 10 and the absorption pipe 20. Sea water, lake water, river water, or an alkaline liquid is introduced to the liquid introducing section 12 from outside the absorption tower 90. The introduced liquid is supplied to the tube 40 in the absorption pipe 20.

The baffle 13 is installed on the liquid introducing section 12 parallel to the x-y plane. The baffle 13 is provided farther in the -z direction than the exhaust gas introducing section 16. The baffle 13 has a function to separate the introduction pipe 10 into a region where exhaust gas is introduced and a region where exhaust water, i.e. used liquid, is stored.

The bottom of the introduction pipe 10 may function as an exhaust water reservoir that temporarily stores liquid that has been ejected and fallen from inside the absorption tower 90. The introduction pipe 10 includes an exhaust water expelling section 18 at the bottom thereof, and may expel the stored exhaust water from the exhaust water expelling section 18 to the outside of the absorption tower 90.

The exhaust gas expelled from a power apparatus such as a ship engine is introduced to the exhaust gas introducing section 16 to be circulated in a predetermined circulation direction in the absorption tower 90. In the present embodiment, the exhaust gas is introduced in a manner to circulate in a spiral in the internal space of the absorption tower 90. The exhaust gas introducing section 16 is provided with a straight line shape near a connecting portion connecting to the introduction pipe 10. It should be noted that the outer side wall of the exhaust gas introducing section 16 extends in a tangential direction of the outer contour of the introduction pipe 10. The internal side wall of the exhaust gas introducing section 16 is provided to extend in a direction orthogonal to the side walls of the absorption tower 90. In this way, the exhaust gas can circulate inside the absorption tower 90.

The absorption pipe 20 includes a tube 40 that transports, in the z direction, the liquid supplied from the liquid introducing section 12 and that is provided extending in the z direction inside the absorption pipe 20. The absorption pipe 20 further includes a plurality of branch tubes 42 that are provided at constant intervals in the z direction of the tube 40. The branch tubes 42 may be connected to the tube 40 through welding. The branch tubes 42 branch from the tube 40 and form flow paths in the direction of the x-y plane through which the liquid flows. The pitch of the branch tubes 42 in the z direction may be 0.3 m.

The absorption pipe 20 further includes a plurality of ejecting sections 44 that receive liquid from the branch tubes 42 and eject the liquid into the internal space of the absorption pipe 20. The ejecting sections 44 may be connected to the branch tubes 42 by a screwing means, or may be connected to the branch tubes 42 through welding. The ejecting sections 44 eject the liquid and cause gas-liquid contact between the exhaust gas and the liquid. In this way, it is possible to remove sulfur oxide or the like contained in the exhaust gas and clean the exhaust gas. The ejecting sections 44 may be spray nozzles that eject the liquid in an open cone shape with an axis in the x-y plane. Ejection openings may be provided in the surfaces of the ejecting sections 44 where the x marks are shown in Fig. 1.

The absorption pipe 20 includes a first divided portion and a second divided portion obtained by dividing the side wall of the absorption pipe 20 with a first plane with a central axis oriented in the z direction. The first and second divided portions are connected in a manner to be rotatable by a rotating mechanism provided on an outside surface of the absorption pipe 20. The rotating mechanism in this Specification is a structure that connects a door portion in a rotatable manner to the absorption pipe 20 or the absorption tower 90. In the present example, the rotating mechanism is a hinge portion 30. The hinge portion 30 may include a plurality of hinges 32. The hinges 32 may be hinges that include a pillar as an axle thereof, a ball bearing, and an outer ring.

The absorption pipe 20 may have a length of 3 m in the z direction and a diameter of 700 mm. In this way, the absorption tower 90 including the small absorption pipe 20 is particularly suitable for a ship or the like where there is not much free space to use as a region to install the exhaust gas processing apparatus 100.

The outer pipe 50 includes a liquid feedback ring 52 that protrudes as a ring shape from the inner wall of the outer pipe 50 toward the central axis. The outer pipe 50 may include a plurality of liquid feedback rings 52 at different positions in the z direction. The liquid feedback rings 52 prevent the liquid that has been raised up in the z direction along with the exhaust gas from being expelled to the outside of the absorption tower 90. The liquid that has adhered to a liquid feedback ring 52 is dropped into the introduction pipe 10 by its own weight upon reaching a certain size, through holes 53. The exhaust gas that has been cleaned by the liquid is expelled to an external exhaust gas pipe from the exhaust gas output pipe 60.

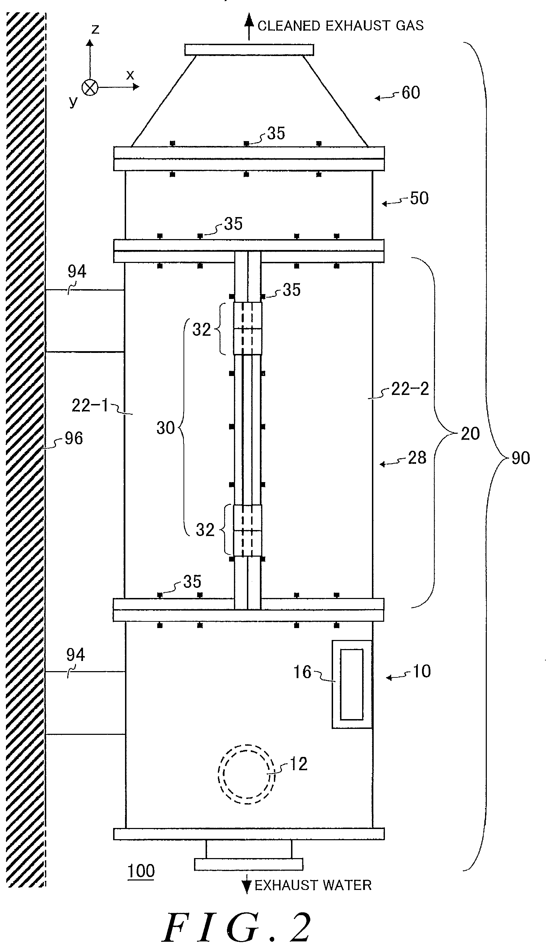

Fig. 2 is a schematic view of a side surface of the exhaust gas processing apparatus 100. At least one of the first divided portion 22-1 and the second divided portion 22-2 formed by dividing the side wall of the absorption pipe 20 is a door portion 28 that is rotatable with respect to the absorption tower 90. In the present embodiment, the first divided portion 22-1 is a portion of the absorption pipe 20 secured to the installation platform 94, and the second divided portion 22-2 is the door portion 28. The installation platform 94 is a stage secured to a wall surface 96 of the ship. The absorption tower 90 may be secured to the wall surface 96 at a plurality of locations.

In the present example, the door portion 28 is rotatable with respect to the absorption pipe 20 with the z direction as the axis, and therefore it is possible to perform maintenance on the ejecting sections 44 inside the absorption pipe 20 without removing the absorption tower 90 from the installation platform 94. Therefore, a crane or the like is not needed to remove the absorption tower 90, and so space reserved for installing the crane becomes unnecessary and no cost is incurred for a crane. In addition, since there is no need for the work of removing the absorption tower 90, the maintenance work time can be reduced by a corresponding amount. In this way, it is possible to simplify the maintenance work.

The door portion 28 may be at least a portion of a side wall of the absorption tower 90 that is capable of opening and closing. Therefore, it is easy to access the entire inside of the absorption pipe 20, and so the maintenance of the ejecting sections 44 becomes easy. The door portion 28 in this example is provided in the absorption pipe 20 in a region that is wider in the z direction than a region opposite the plurality of ejecting sections 44. Specifically, the door portion 28 is provided across the entire length of the absorption pipe 20 in the z direction. Accordingly, it also becomes easier to access the branch tubes 42 on the uppermost side and bottommost side, and it becomes easier to perform maintenance of the ejecting sections 44.

In the closed state, the connecting portion between the door portion 28 and the absorption pipe 20 outside the door portion 28 is fastened by the securing member 35 with a sealing member sandwiched therebetween. The introduction pipe 10, the absorption pipe 20, the outer pipe 50, and the exhaust gas output pipe 60 are also connected in the z direction in the stated order, and flanges of these components are secured by the securing member 35 with the sealing member sandwiched therebetween. The securing member 35 may be a set of a screw and a nut, and the sealing member may be packing. In the closed state, a sealing material such as silicon-type and urethane-type material may be further provided on the surface of the flat connecting portion between the door portion 28 and the absorption pipe 20 and the surface of the connecting portion of each flange. In this way, it is possible to further improve the water-tight property at each connecting portion.

The absorption tower 90 may be formed of a corrosion resistant material, and may be formed of SUS316L, as an example. It should be noted that the density of the material forming the door portion 28 may be less than the density of the material forming the side wall of the absorption pipe 20 in the region other than the door portion 28. In this way, when the door portion 28 is open, it is possible to prevent bending of the door portion 28 due to its own weight. By preventing bending of the door portion 28, it is possible to prevent a decrease in the water tight property between the door portion 28 and the introduction pipe 10, the absorption pipe 20, and the outer pipe 50.

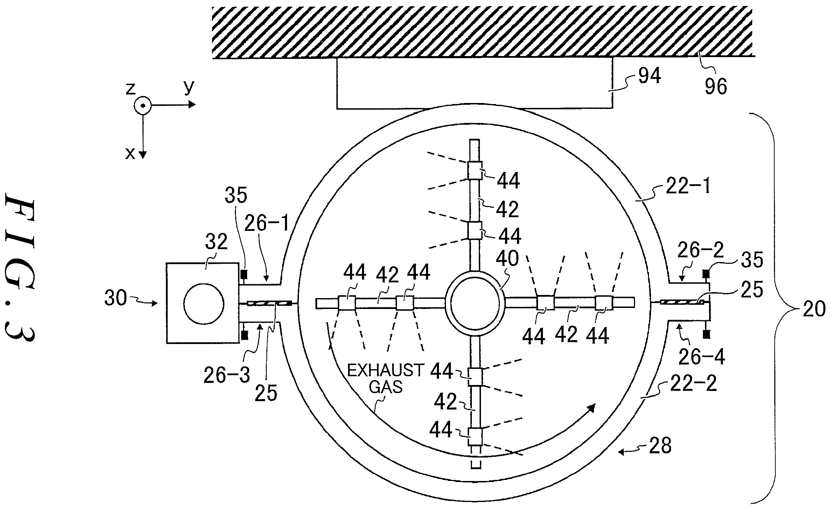

Fig. 3 is a schematic view of the AA cross section from Fig. 1 in the closed state. In the present example, the first divided portion 22-1 is an immovable portion secured to the installation platform 94, and the second divided portion 22-2 is the door portion 28. The first divided portion 22-1 includes a flat connecting portion 26-1 on a side of the hinge 32 and a flat connecting portion 26-2 on a side opposite the hinge 32. In the same manner, the second divided portion 22-2 includes a flat connecting portion 26-3 and a flat connecting portion 26-4. Packing 25 is provided as the sealing member both between the flat connecting portions 26-1 and 26-3 and between the flat connecting portions 26-2 and 26-4. Furthermore, the flat connecting portions 26-1 and 26-3 and the flat connecting portions 26-2 and 26-4 are respectively fastened together and secured by the securing member 35.

The absorption pipe 20 in this example includes four branch tubes 42 in a single x-y plane. The dotted lines schematically show the liquid ejected from the ejecting sections 44. Furthermore, the solid line arrows show the orientation of the circulation of the exhaust gas. In the present example, circulation of the exhaust gas can be assisted by the ejecting sections 44 provided in each branch tube 42 ejecting the liquid in a direction that does not interfere with the circulation of the exhaust gas.

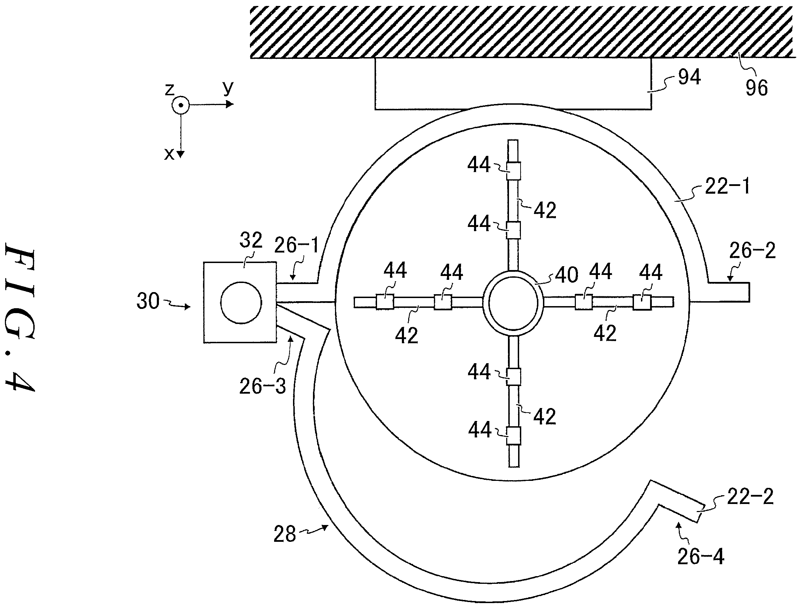

Fig. 4 is a schematic view of the AA cross section from Fig. 1 in the open state. When maintenance is performed, first, the sealing material provided on the surface of the flat connecting portions 26 and the surface of each flange connecting portion is removed. Next, the securing member 35 is removed and the second divided portion 22-2 (the door portion 28) is opened by being rotated relative to the first divided portion 22-1, with the axis of the hinge 32 as the rotational axis. Next, the parking 25 of the flat connecting portions 26 is removed. Next, maintenance is performed on the ejecting sections 44 while in a state where the inside of the absorption pipe 20 is exposed. The maintenance may include replacing the ejecting sections 44, cleaning the ejecting sections 44, or the like. After the maintenance is finished, the packing 25 is sandwiched by the flat connecting portions 26, the first divided portion 22-1 and the second divided portion 22-2 are closed, and the flat connecting portions 26 and each flange are secured by the securing member 35. Furthermore, the sealing material is applied to the surfaces of the flat connecting portions 26 and the surface of each flange connecting portion.

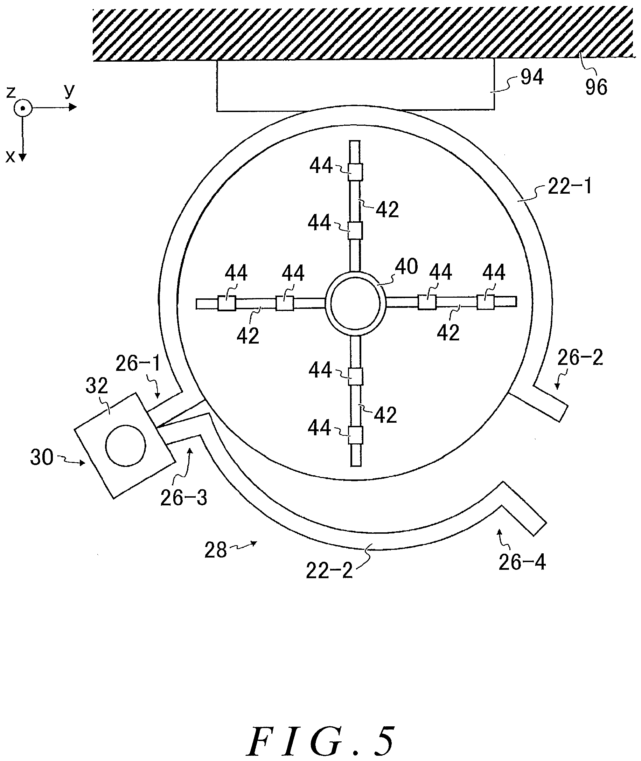

Fig. 5 is a schematic view of the AA cross section in the closed state, according to a modification of the first embodiment. In the first embodiment, absorption pipe 20 is divided in two by a plane parallel to the z direction passing through the center of the absorption pipe 20. In the present modification, the absorption pipe 20 is divided in two by a plane parallel to the z direction between the center of the absorption pipe 20 and a wall surface inside the absorption pipe 20. In the present embodiment as well, there is no need for the crane, and therefore it is possible to shorten the maintenance work time for the ejecting sections 44.

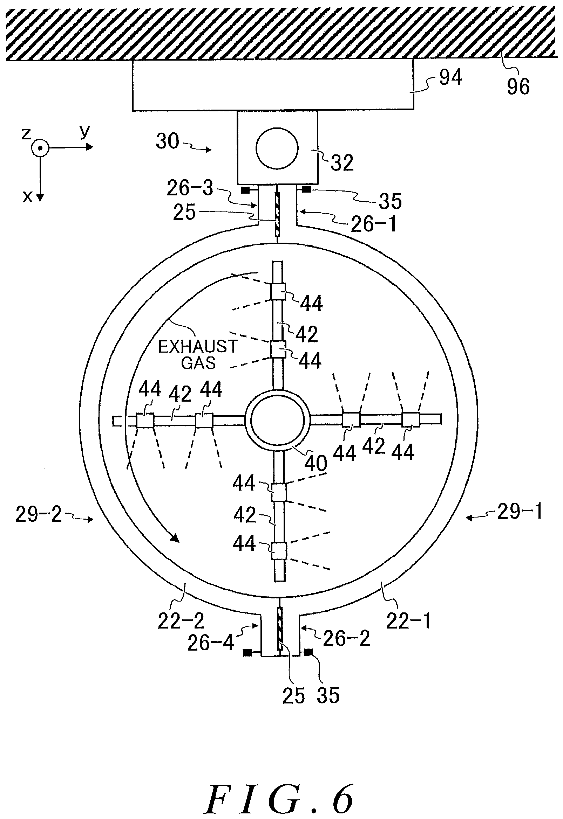

Fig. 6 is a schematic view of the AA cross section in the closed state, according to a second embodiment. In the present example, the absorption pipe 20 is secured to the installation platform 94 by the hinge portion 30 instead of the first divided portion 22-1. Furthermore, the first divided portion 22-1 and the second divided portion 22-2 are joined to the absorption tower 90 in a manner to be rotatable in opposite directions from each other with the hinge portion 30 as an axis. In the present example, the first divided portion 22-1 and the second divided portion 22-2 are respectively a first door 29-1 and a second door 29-2. The second embodiment differs from the first embodiment with respect to these points. The remaining points in the second embodiment are the same as in the first embodiment. In the present embodiment, the hinge portion 30 is secured to the installation platform 94, and therefore it is possible to increase the strength of the absorption pipe 20 and the hinge portion 30 in the axial direction, i.e. the z direction, when the first door 29-1 and the second door 29-2 are opened.

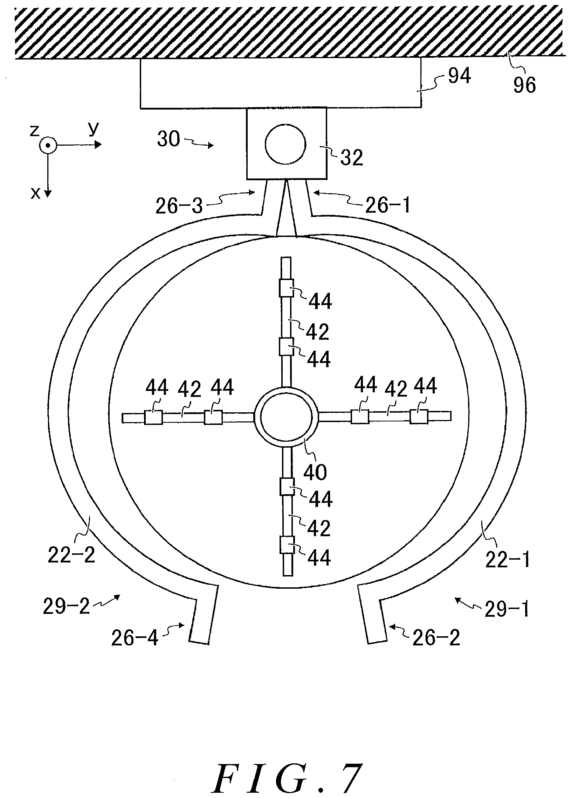

Fig. 7 is a schematic view of the AA cross section in the open state, according to the second embodiment. In this Specification, it is assumed that the door portion 28 includes both the first door 29-1 and the second door 29-2. In the present example, the door portion 28 is a double-door, and therefore the open region of the door portion 28 can be made larger than in the first embodiment where the door portion 28 is a single-door. Specifically, the opening angle of the door portion 28 is 180 degrees in the first embodiment, but is 360 degrees in the second embodiment. In this way, access becomes easier in the depth direction of the door portion 28 in addition to the z direction of the absorption pipe 20, and therefore maintenance of the ejecting sections 44 becomes more efficient.

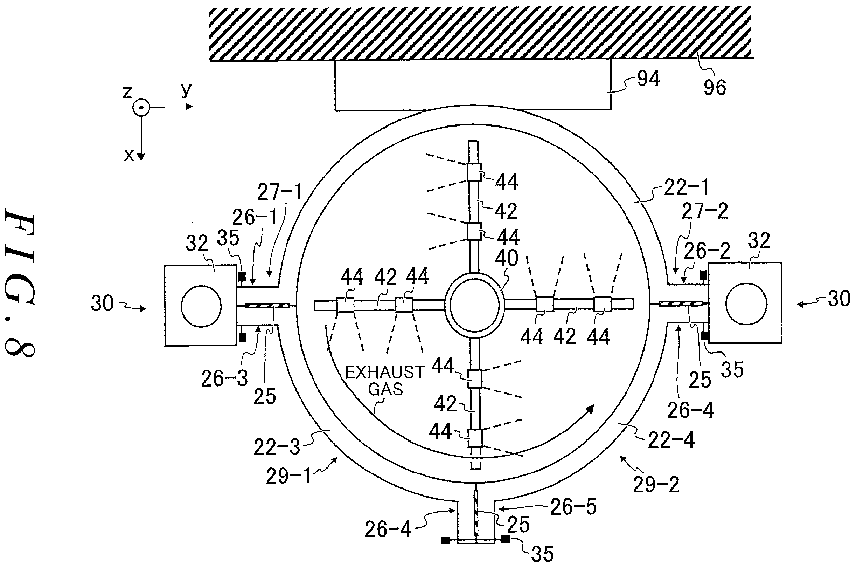

Fig. 8 is a schematic view of the AA cross section in the closed state, according to a third embodiment. In the present example, the first divided portion 22-1 is secured to the installation platform 94 in a manner to be an immovable portion. Furthermore, the door portion 28 includes the first door 29-1 and the second door 29-2. Furthermore, the first door 29-1 is provided in a manner to be rotatable with the end portion 27-1 of the immovable portion as an axis. In addition, the second door 29-2 is provided in a manner to be rotatable in a direction opposite that of the first door 29-2 with an end portion 27-2 of the immovable portion on the side opposite the first door 29-1 as an axis. The third embodiment differs from the first embodiment with respect to these points. The remaining points in the third embodiment are the same as in the first embodiment.

The absorption pipe 20 in the present embodiment includes the first divided portion 22-1 obtained by dividing the absorption pipe 20 with a first plane passing through a central axis in the z direction and a second divided portion that is a portion of the absorption pipe 20 other than the first divided portion 22-1. Portions obtained by dividing the second divided portion with a second plane different from the first plane are a third divided portion 22-3 and a fourth divided portion 22-4. The third divided portion 22-3 and the fourth divided portion 22-4 correspond respectively to the first door 29-1 and the second door 29-2.

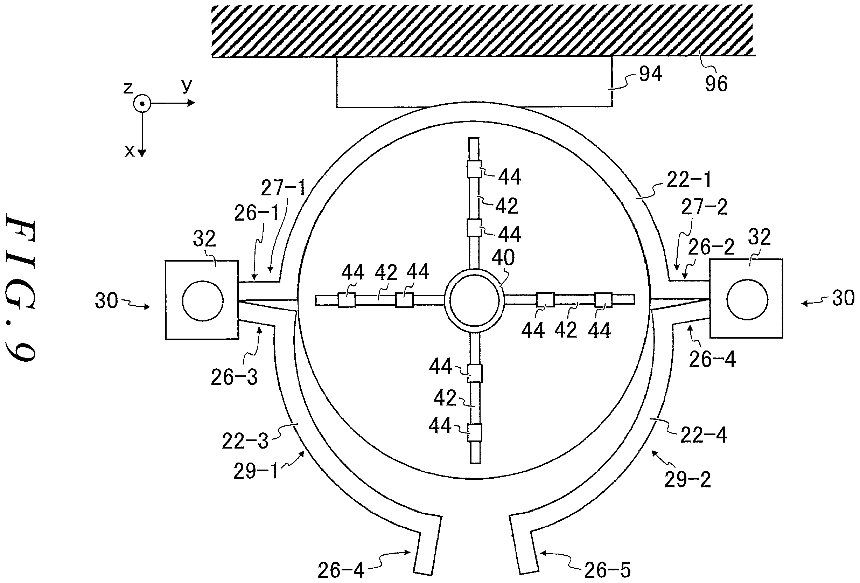

Fig. 9 is a schematic view of the AA cross section in the open state, according to a third embodiment. In the present example, the doors 29 have a smaller rotational radius than in the first embodiment and the second embodiment. Specifically, the rotational radius of the door portion 28 is half that of the door portion 28 in the first and second embodiments. Accordingly, it is possible to fully open the doors 29 in a smaller space than in the first and second embodiments. Therefore, maintenance of the ejecting sections 44 becomes more efficient.

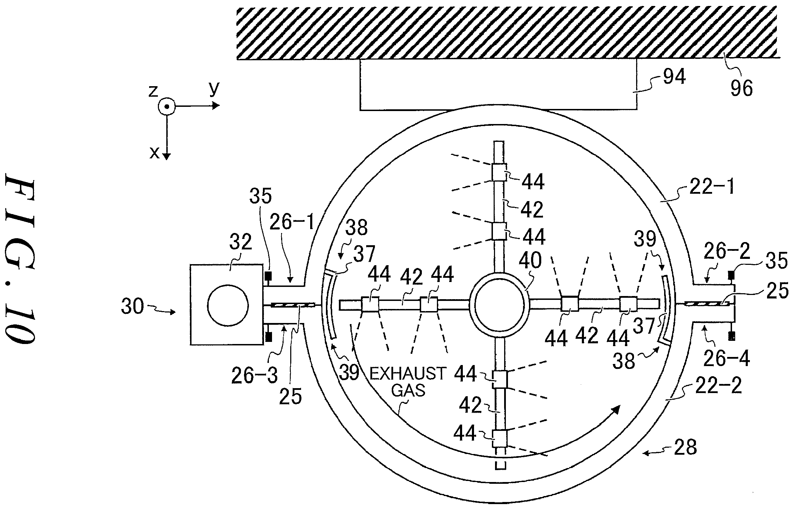

Fig. 10 shows an example in which a covering section 37 is provided in the first embodiment. The present example further includes the covering section 37 that covers the connecting portion between the door portion 28 and the absorption pipe 20 inside the absorption pipe 20, compared to the example shown in Fig. 3. In this Specification, the connecting portion between the door portion 28 and the absorption pipe 20 means the boundary portion between the door portion 28 and the absorption pipe 20 at the inner wall of the absorption pipe 20. In the present example, it is possible to more reliably seal the curved connecting portion where it is difficult to seal in the gas and the liquid. The present example differs from the first embodiment with respect to these points. The remaining points in the present example are the same as in the first embodiment.

The covering section 37 includes a connecting end 38 that is connected to one of the door portion 28 and the absorption pipe 20, and an open end 39 that is positioned on the side of the connecting portion opposite the connecting end 38 and is not connected to the door portion 28 and the absorption pipe 20. The connecting end 38 is provided farther upstream than the open end 39 in the circulation direction of the exhaust gas. In this way, it is possible to seal the curved connecting portion without impeding the circulation of the exhaust gas.

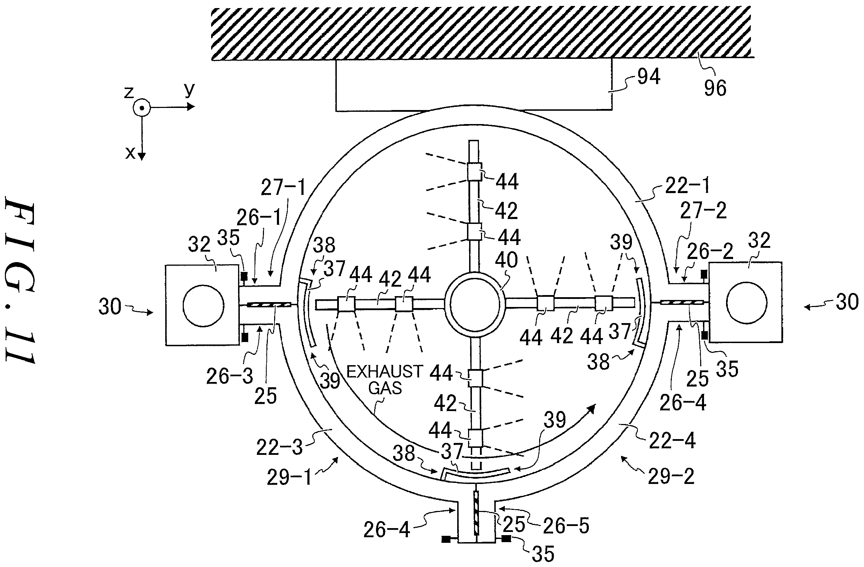

Fig. 11 shows an example in which a covering section 37 is provided in the third embodiment. The present example further includes the covering section 37 that covers the connecting portion between the first door 29-1 and the second door 29-2 inside the absorption pipe 20 in the example shown in Fig. 8. In this Specification, the connecting portion between the first door 29-1 and the second door 29-2 means the boundary portion between the first door 29-1 and the second door 29-2 at the inner wall of the absorption pipe 20. Therefore, it is possible to more reliably seal the curved connecting portion. The present example differs from the third embodiment with respect to these points. The remaining points in the present example are the same as in the third embodiment. Furthermore, since the connecting end 38 is provided farther upstream than the open end 39 in the circulation direction of the exhaust gas in the present example as well, it is possible to seal the curved connecting portion without impeding the circulation of the exhaust gas.

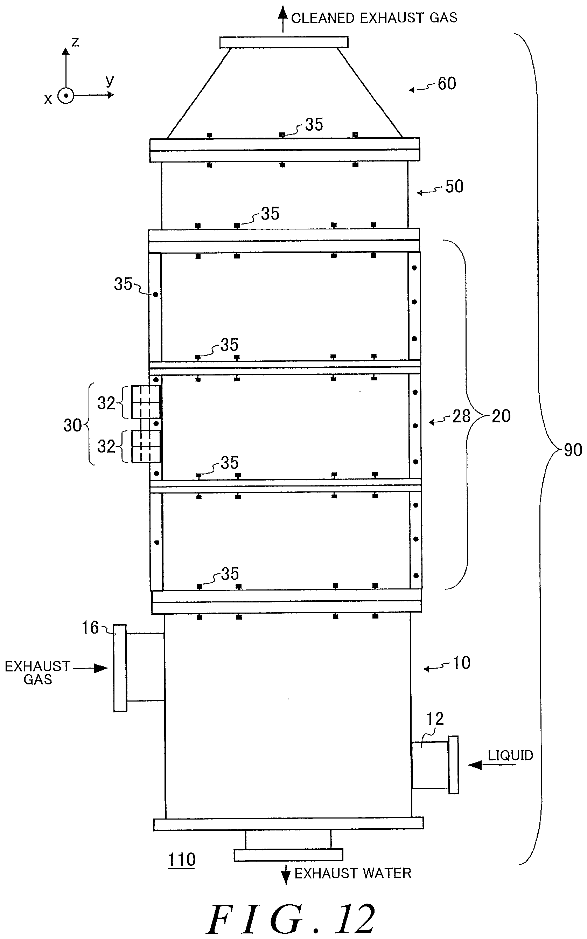

Fig. 12 is a schematic view of a front surface of an exhaust gas processing apparatus 110 according to a fourth embodiment. In the present example, the door portion 28 is provided in at least a portion of a region opposite the ejecting sections 44. In the present example, the door portion 28 is provided in the middle of the absorption pipe 20 in the z direction, and is not provided in an upper portion and a lower portion in a manner to sandwich the middle of the absorption pipe 20 in the z direction. The fourth embodiment differs from the first embodiment with respect to these points. The remaining points in the fourth embodiment are the same as in the first embodiment. The modification of the first embodiment, the second and third embodiments, and the covering section 37 may also be applied in the present example.

Generally, inside a ship, structures having various lengths in the z direction are arranged around the exhaust gas processing apparatus 110. With the door portion 28 in the present example, the opening range of the door portion 28 in the z direction is narrower than in the first to third embodiments, but it is possible to set the position of the door portion 28 such that the opening and closing thereof is not impeded by the structures arranged around the exhaust gas processing apparatus 110 by providing the door portion 28 only in a prescribed range in the z direction.

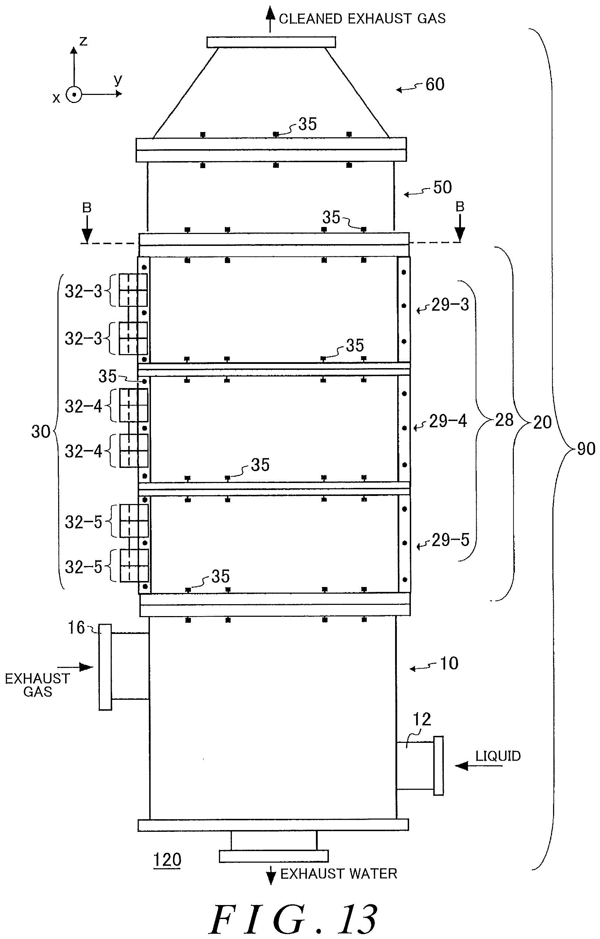

Fig. 13 is a schematic view of a front surface of an exhaust gas processing apparatus 120 according to a fifth embodiment. The door portion 28 in the present embodiment includes a plurality of doors 29-3 to 29-5 divided at a plurality of different positions in the absorption pipe 20 in the direction. Furthermore, the hinge portion 30 includes a plurality of hinges 32-3 to 32-5 joining the absorption pipe 20 to the plurality of doors 29-3 to 29-5. The fifth embodiment differs from the fourth embodiment with respect to these points. The remaining points in the fifth embodiment are the same as in the fourth embodiment.

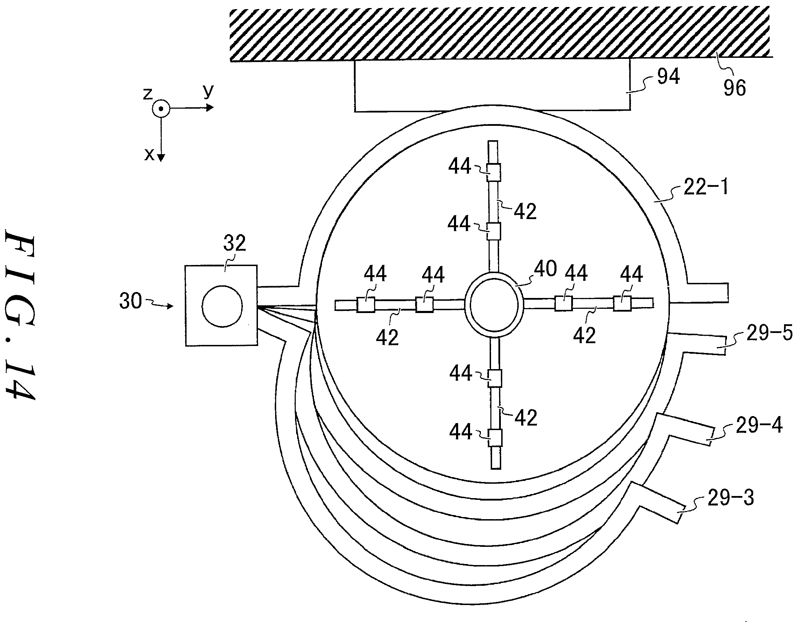

Fig. 14 is a schematic view of the BB cross section from Fig. 13 in the open state. The first divided portion 22-1 in the present example is an integrated immovable portion joined to the plurality of doors 29-3 to 29-5 by the hinge portion 30. In the present example, in addition to the effect of the first embodiment, there is an effect that is possible to prevent deformation of the doors 29 due to their own weight, by making each door 29 have a small volume.

The number of doors 29 forming the door portion 28 is not limited to three, and may be two or may be four or more. It should be noted that care should be taken because increasing the number of doors 29 increases the number of sealed locations between a door 29 and the first divided portion 22-1, i.e. the immovable portion, and sealed locations between the doors 29 in the z direction.

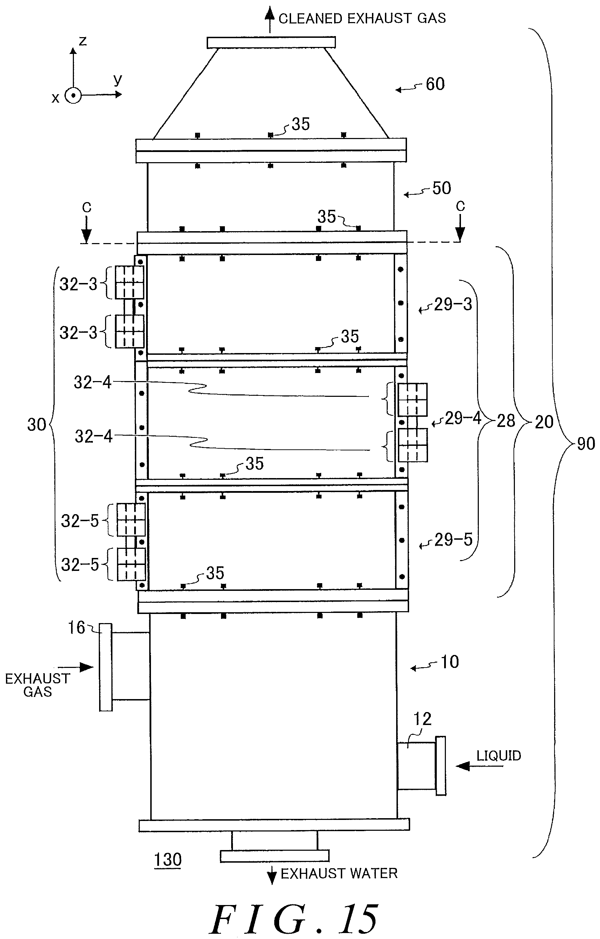

Fig. 15 is a schematic view of a front surface of an exhaust gas processing apparatus 130 according to a sixth embodiment. The hinge portion 30 in the present example includes a plurality of hinges 32-3 to 32-5 corresponding respectively to the plurality of doors 29-3 to 29-5. The hinges 32-3 to 32-5 are provided at positions corresponding to the direction in which the doors 29-3 to 29-5 respectively open and close. In the present example, the hinges 32-3 and 32-5 are provided on the left side in the front surface view such that the doors 29-3 and 29-5 open to the left, and the hinge 32-4 is provided on the right side in the front surface view such that the door 29-4 opens to the right. The sixth embodiment differs from the fifth embodiment with respect to these points. The remaining points in the sixth embodiment are the same as in the fifth embodiment.

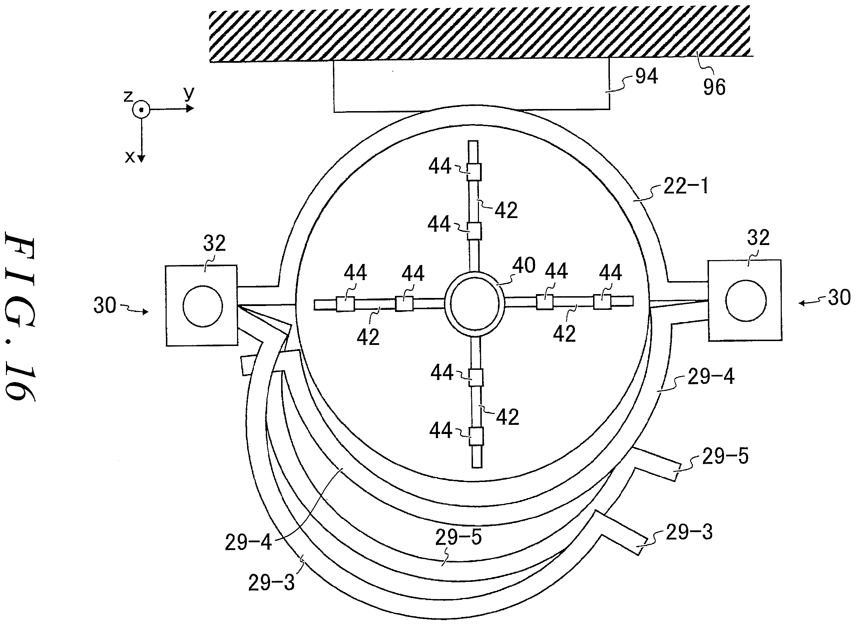

Fig. 16 is a schematic view of the CC cross section from Fig. 15 in the open state. As described above, the third door 29-3 and the fourth door 29-4 and also the fourth door 29-4 and the fifth door 29-5 are able to open and close in different directions relative to the first divided portion 22-1, which is the immovable portion. In the present example, by using a plurality of doors 29 that are able to open and close in different directions from each other, it is possible to set the position of the door portion 28 such that the opening and closing of the doors 29 is not impeded by the structures arranged around the exhaust gas processing apparatus 130.

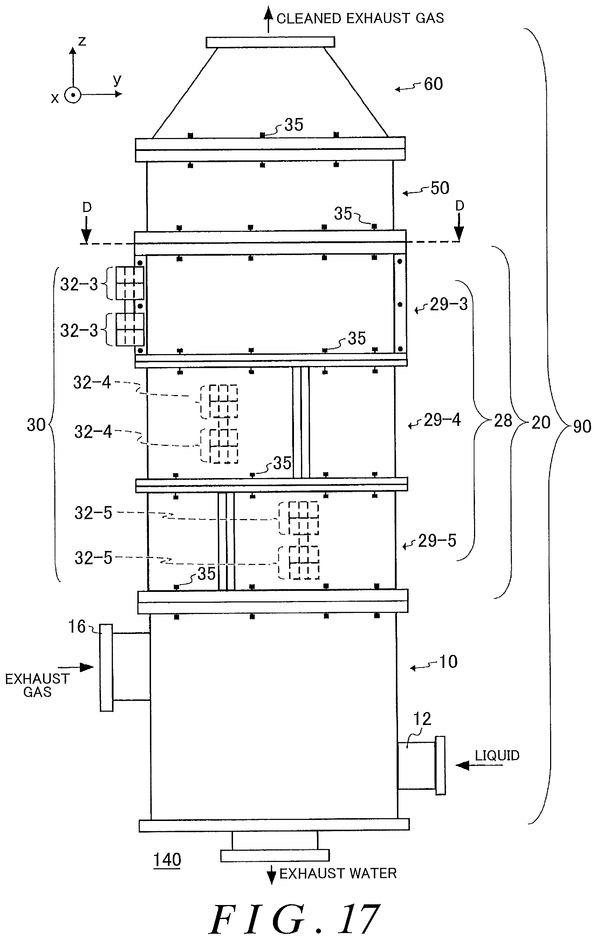

Fig. 17 is a schematic view of a front surface of an exhaust gas processing apparatus 140 according to a seventh embodiment. The dotted lines among the hinges 32 indicate hinges 32 positioned deeper than the plane of the drawing. In the present example, at least one of the hinges 32 is provided at a position where the absorption pipe 20 intersects with a first plane passing through the central axis of the z direction. Furthermore, at least another one of the hinges 32 is provided at a position other than a position where the absorption pipe 20 intersects with this first plane. The seventh embodiment differs from the sixth embodiment with respect to these points. The remaining points in the seventh embodiment are the same as in the sixth embodiment.

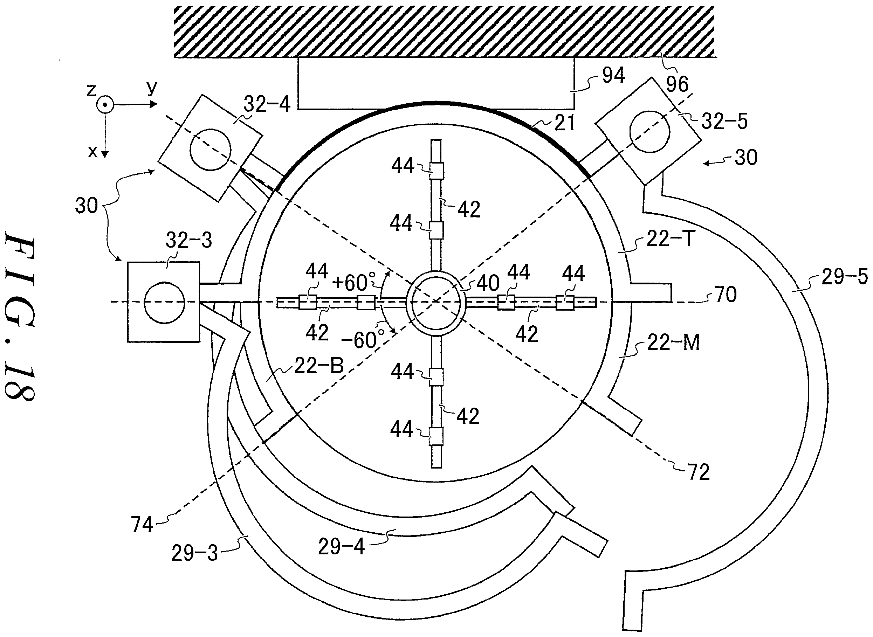

Fig. 18 is a schematic view of the DD cross section from Fig. 17 in the open state. In the present example, the first plane 70 described above is the y-z plane. Furthermore, a second plane 72 is a plane obtained by rotating the first plane 70 clockwise by 60 degrees on the z axis. Yet further, a third plane 74 is a plane obtained by rotating the first plane 70 counter-clockwise by 60 degrees on the z axis. The divided portions 22 in the present example include a bottom divided portion 22-B, a middle divided portion 22-M, and a top divided portion 22-T arranged in the stated order in the z direction. The bottom divided portion 22-B, the middle divided portion 22-M, and the top divided portion 22-T are secured to the installation platform 94. In the region from the top divided portion 22-T to the bottom divided portion 22-B, the shared immovable portion 21 that is shared by these regions in the z direction is shown by a thick line. The third door 29-3 opens and closes relative to the top divided portion 22-T via the hinge 32-3, the fourth door 29-4 opens and closes relative to the middle divided portion 22-M via the hinge 32-4, and the fifth door 29-5 opens and closes relative to the bottom divided portion 22-B via the hinge 32-5.

In the present example, the third hinge 32-3 is provided at a position on the (-y)-direction side among the positions where the absorption pipe 20 intersects with the first plane 70. Furthermore, the fourth hinge 32-4 is provided at a position on the (-x)-direction side among the positions where the absorption pipe 20 intersects with the second plane 72, and the fifth hinge 32-5 is provided at a position on the (-x)-direction side among the position where the absorption pipe 20 intersects with the third plane 74. However, the third hinge 32-3 to the fifth hinge 32-5 may be at arbitrary positions selected from among the positions where the absorption pipe 20 intersects with the first plane 70 to the third plane 74. In the present example, the opening and closing position of each door 29 in the z direction can be set more flexibly than in the seventh embodiment. Therefore, the position of the door portion 28 can be set more flexibly, such that the opening and closing of the door portion 28 is not impeded by the structures arranged around the exhaust gas processing apparatus 130.

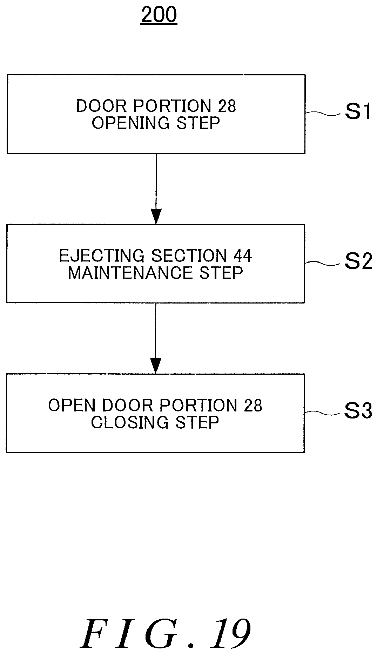

Fig. 19 is a flow chart showing a maintenance method 200 of the exhaust gas processing apparatus 120. A maintenance method for any of the exhaust gas processing apparatuses 100, 110, 130, and 140 can be performed using the same procedures as in the present example. In the maintenance method 200, maintenance can be performed on the ejecting sections 44 inside the absorption pipe 20 without removing the absorption tower 90 from the installation platform 94, and therefore it is possible to restrict the cost of the maintenance and to shorten the maintenance work time.

First, in a first step S1, the door portion 28 is opened. In the first step S1, at least one door 29 among a plurality of doors 29 may be opened. For example, the fourth door 29-4 of the exhaust gas processing apparatus 120 is opened. In this way, by enabling at least a portion of the side wall of the absorption tower 90 to be opened and closed, a state is realized in which at least a portion inside the absorption tower 90 is exposed. After this, in a second step S2, maintenance is performed on the ejecting sections 44. The maintenance may include replacing the ejecting sections 44, cleaning the ejecting sections 44, or the like. After this, in a third step S3, the opened door portion 28 is closed and maintenance is ended.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

### List of Reference Numerals

10: introduction pipe, 12: liquid introducing section, 13: baffle, 16: exhaust gas introducing section, 18: exhaust water expelling section, 20: absorption pipe, 21: shared immovable portion, 22: divided portion, 25: packing, 26: flat connecting portion, 27: end portion, 28: door portion, 29: door, 30: hinge portion, 32: hinge, 35: securing member, 37: covering section, 38: connecting end, 39: open end, 40: tube, 42: branch tube, 44: ejecting section, 50: outer pipe, 52: liquid feedback ring, 53: hole, 60: exhaust gas output pipe, 70: first plane, 72: second plane, 74: third plane, 90: absorption tower, 94: installation platform, 96: wall surface, 100: exhaust gas processing apparatus, 110: exhaust gas processing apparatus, 120: exhaust gas processing apparatus, 130: exhaust gas processing apparatus, 140: exhaust gas processing apparatus, 200: maintenance method

## Claims

1. An exhaust gas processing apparatus comprising an absorption tower that cleans exhaust gas by causing gas-liquid contact between the exhaust gas and a liquid, wherein the absorption tower includes:
an ejecting section that ejects the liquid inside the absorption tower; and
a door portion that is able to open and close at least a portion of a side wall of the absorption tower.

2. The exhaust gas processing apparatus according to Claim 1, further comprising:
a rotating mechanism that links the door portion and the absorption tower such that the door portion is able to rotate relative to the absorption tower.

3. The exhaust gas processing apparatus according to Claim 2, wherein
the rotating mechanism links the door portion and the absorption tower such that the door portion is able to rotate with a longitudinal direction of the absorption tower as an axis.

4. The exhaust gas processing apparatus according to Claim 3, wherein
the absorption tower includes a first divided portion and a second divided portion obtained by dividing the side wall of the absorption tower with a first plane passing through a central axis in the longitudinal direction of the absorption tower, and
the door portion is at least one of the first divided portion and the second divided portion of the side wall.

5. The exhaust gas processing apparatus according to Claim 4, wherein
the first divided portion and the second divided portion are linked to the absorption tower such that the first divided portion and the second divided portion are able to rotate in opposite directions from each other with the rotating mechanism as an axis, and the first divided portion and the second divided portion are both the door portion.

6. The exhaust gas processing apparatus according to Claim 5, wherein
the absorption tower is secured to a wall surface of a ship via the rotating mechanism.

7. The exhaust gas processing apparatus according to Claim 2, wherein
the absorption tower further includes an immovable portion where the side wall does not open and close, and
the door portion includes a first door provided in a manner to be able to rotate with an end portion of the immovable portion as an axis and a second door that is provided in a manner to be able to rotate in a direction opposite the rotating direction of the first door with an end portion of the immovable portion on a side opposite the first door as an axis.

8. The exhaust gas processing apparatus according to Claim 7, wherein
the absorption tower includes:
a first divided portion and a second divided portion obtained by dividing the absorption tower with a first plane passing through a central axis in a longitudinal direction of the absorption tower; and
a third divided portion and a fourth divided portion obtained by dividing the second divided portion with a second plane that differs from the first plane and passes through a central axis in the longitudinal direction of the absorption tower,
the first divided portion is the immovable portion, and
the third divided portion and the fourth divided portion are respectively the first door and the second door.

9. The exhaust gas processing apparatus according to any one of Claims 1 to 8, wherein
the door portion is provided in a region that is at least a portion of a region opposite the ejecting section.

10. The exhaust gas processing apparatus according to any one of Claims 1 to 9, wherein
the door portion is provided in a region that is wider than a region opposite the ejecting section in a longitudinal direction of the absorption tower.

11. The exhaust gas processing apparatus according to any one of Claims 1 to 10, wherein
the absorption tower includes at least an introduction pipe, an absorption pipe, and an exhaust gas output pipe,
the absorption pipe houses the ejecting section therein, and
the door portion is provided across an entire length of the absorption pipe in a longitudinal direction.

12. The exhaust gas processing apparatus according to any one of Claims 1 to 11, wherein
a density of a material of the door portion is less than a density of a material of the side wall of the absorption tower other than the door portion.

13. The exhaust gas processing apparatus according to any one of Claims 1 to 12, further comprising:
a covering section that is provided inside the absorption tower and covers a connecting portion between the door portion and the absorption tower.

14. The exhaust gas processing apparatus according to Claim 13, wherein
the covering section includes:
a connecting end that is connected to one of the door portion and the absorption tower; and
an open end that is positioned on a side opposite the connecting end relative to the connecting portion and is not connected to the door portion and the absorption tower,
the absorption tower further includes an exhaust gas introducing section that introduces the exhaust gas in a manner to circulate inside the absorption tower in a predetermined circulation direction, and
the connecting end is provided upstream from the open end in the circulation direction.

15. The exhaust gas processing apparatus according to Claim 2, wherein
the door portion includes a plurality of doors obtained by dividing the absorption tower at a plurality of different positions in a longitudinal direction of the absorption tower.

16. The exhaust gas processing apparatus according to Claim 15, wherein
the absorption tower includes an integrated immovable portion to which the plurality of doors are joined.

17. The exhaust gas processing apparatus according to Claim 16, wherein
the plurality of doors includes a third door and a fourth door that are able to open and close in different directions from each other relative to the immovable portion.

18. The exhaust gas processing apparatus according to Claim 17, wherein
the rotating mechanism includes a plurality of rotating mechanisms provided corresponding respectively to the plurality of doors, and
the plurality of rotating mechanisms are provided at positions corresponding respectively to the opening and closing directions of each of the plurality of doors.

19. The exhaust gas processing apparatus according to Claim 18, wherein
at least one rotating mechanism among the plurality of rotating mechanisms is provided at a position where the absorption tower intersects with a first plane passing through a central axis in the longitudinal direction of the absorption tower, and
at least another one rotating mechanism among the plurality of rotating mechanisms is provided at a position other than the position where the absorption tower intersects with the first plane.

20. A maintenance method of an exhaust gas processing apparatus including an absorption tower that cleans exhaust gas by causing gas-liquid contact between the exhaust gas and a liquid, the method comprising:
opening a door portion that is able to open and close at least a portion of a side wall of the absorption tower;
performing maintenance on an ejecting section that ejects the liquid, in a state where the inside of the absorption tower is exposed; and
closing the door portion.
